# EUROPEAN PATENT SPECIFICATION

(11) **EP 0 675 342 B1**
(45) Date of publication and mention of the grant of the patent: **01.03.2000**
(21) Application number: 95200188.1
(22) Date of filing: 10.12.1991
(51) Int. Cl.: G01D 5/14, G01D 3/028, G01L 3/10, G01M 15/00, G01L 23/22

(54) **Magnetostrictive sensor**
Magnetostriktiver Wandler
Capteur magnétostrictif

(30) Priority: 10.12.1990 US 625222; 24.06.1991 US 720240
(43) Date of publication of application: 04.10.1995
(62) Divisional of application: 92902896.7
(73) Proprietor: SENSORTECH, L. P., Fairfield, IA 52556 (US)
(72) Inventor: Klauber, Robert D., Fairfield, IA 52556 (US); Vigmostad, Erik B., Fairfield, IA 52556 (US); Sprague, Frederick P., Fairfield, IA 52556 (US); Mandarino, Joseph V., Fairfield, IA 52556 (US)
(74) Representative: Jacquard, Philippe Jean-Luc

(56) References cited:
- EP-A- 0 217 640
- DE-A- 3 823 935
- GB-A- 849 360
- US-A- 3 866 462
- PATENT ABSTRACTS OF JAPAN vol. 10, no. 154 (P-463) (2210) 4 June 1986 & JP-A-61 008 639 (NISSAN JIDOSHA K.K.) 16 January 1986
- CONTROL AND INSTRUMENTATION, vol.12, no.115, 8, LONDON (GB) page 62 J.L. SHEARER ET AL. 'MAGNETOSTRICTIVE TORQUEMETERS'

## Description

This invention relates to magnetostrictive stress and load sensors and more particularly to a method and apparatus for effectively eliminating undesirable voltages induced by external magnetic fluxes while leaving voltages induced by stress variations in a load carrying member effectively unchanged.

A number of researchers have attempted to develop magnetostrictive torque sensors. Magnetostrictive torque sensors take advantage of the magnetostrictive property of ferromagnetic materials whereby tension stress in the material causes an increase in an induced magnetic field B in the material. Compressive stress causes a decrease in the induced magnetic field B. Typically an alternating current carrying coil is used to induce the magnetic field B into a ferromagnetic torque transmitting shaft. A secondary pickup coil, or other means, then monitors the change in the induced magnetic field B as the stress of the shaft changes with torque. The voltage signal generated across the secondary coil is an indicator of the torque. Specific geometry and the number of coils may vary for different magnetostrictive torque sensor designs, but the underlying principle is the same.

Typical magnetostrictive torque sensors are disclosed in U.S. Patents Nos. 4,760,745 to Gashelis; 2,912,642 to Dahle; 4,414,856 to Winterhof; 4,589,290 to Sugiyama; 4,697,459 to Nonomura et al.; 4,939,937 to Klauber et al.; and Application Serial No. 07/518,083 to Klauber et al. The sensor disclosed in U.S. Patent No. 4,760,745, for example, is a four solenoidal coil design which is inherently larger and is, therefore, typically more expensive and less suited for automotive application than the other types of magnetostrictive torque sensors. The other sensors may be miniaturized and are less expensive, but are limited by the random anisotropic variations in magnetic permeability of the iron and steel materials used in production crankshafts and driveshafts. These variations are inherent in the material and distort any measured induced magnetic field changes thereby resulting in inaccuracies and prohibiting the instantaneous monitoring of the stress and load or variations thereof.

Although patent EP-A- 217 640 to Kabushiki et al. provides a means to cancel external flux from an electric motor, there are many very important differences between it and the present invention. For one, unlike the present invention, the Kabushiki reference requires the additional element of an amorphous ribbon (actually two such ribbons) with anisotropic magnetostrictive property which must be attached to the shaft. Also, each pickup coil detects a different flux which has been induced by a different drive coil. Hence, it requires yet another additional element of an extra flux source with extra pickup flux path and two, rather than one, magnetostrictive variations from induced stress of the two fluxes.

Each pickup coil in Kabushiki is wound around a different core. Hence still further additional elements of multiple cores are required for the Kabushiki invention. It needs two separate sensors (detectors), "disposed in angularly spaced relation to the shaft and each capable of detecting variation of the magnetic characteristics ..." (see claim 1 lines 33-37). The present invention can function with only one such sensor.

Further, unlike the present invention, the pickup coils connected in series (all of **412, 422, 432,** and **442**) are aligned physically in space in the same direction with the same winding orientation (see Figure 7 of Kabushiki). It is the orientation of the anisotropic elements attached to the shaft in Kabushiki which give rise to the opposing induced voltages in the pickup coils. The external flux induced voltage differences between **412/422** and **432/442** are due to the 180° *spatial* phase shift of flux in an *electric* motor. Hence the Kabushiki reference can only cancel out external flux from an electric motor and *not from any generic external flux source.* Thus, the Kabushiki reference not only requires additional elements beyond that of the present invention, but it is also limited, unlike the present invention, to cancellation only of one specific type of externally induced flux.

Patent GB-A- 849 360 to Vyzkumny also has very significant differences from the present invention. In addition to the need for slip rings, brushes, and two separate but connected torsional bodies not required by the present invention, two separate driver coils are required. All of these elements are essential for the functioning of the Vyzkumny invention, but are not needed by the present invention.

Further, the drive coils must be wrapped toroidally, unlike the present invention. And two cores with two flux paths are required as well. The present invention does not require two cores or two pickup flux paths. Still further, the pickup coils **21** and **22** must be wrapped completely around the shaft. This makes the Vyzkumny invention considerably more expensive, cumbersome, and difficult to maintain/replace than the present invention.

Additionally, the pickup coils **21** and **22** are not wound in opposite directions, but in the same direction. The induced flux directions in each pickup coil are in opposite directions, but the coil windings are both oriented spatially the same way.

Like Kabushiki, the patent to Kugler, DE-A 38 23 935, needs torsion bar attachments (four of them in all, F₁, F₂, Fₓ₁, and Fₓ₂) Like both Kabushiki and Vyzkumny, it requires multiple sensor heads, flux paths, and driver coils. In fact, for the Kugler invention, eight separate coils are needed, and all eight wrap completely around the shaft, therefore making maintenance and replacement a nightmare. Such problems are non-existent in the present invention due to its simpler design and inherently fewer elements.

Still further, the cancellation of voltage from external fluxes between Kugler's coils M₁ and M₂ would not actually occur completely in practice since the two coils are so far apart from one another spatially. Those skilled in the experimental art of magnetic fields recognize that leakage, fringing, and field gradient effects over such distances are 'substantial, and that in practice the external flux passing through M₁ would be significantly different from the external flux from the same external source which passes through M₂. Hence the Kugler invention would not work accurately as claimed.

The Kabushiki, Vyzkumny, Kugler references are considerably more complex and need more elements, materials, workmanship, and construction than the present, far simpler invention. Additionally, they are all far more expensive to implement.

Patent JP-A-61- 8639 to Tooru shows an unusual design magnetostrictive sensor entailing a single piece construction magnetic core with four legs. Tooru makes no reference to cancellation of external flux and his sensor has no means to provide such cancellation. Further, his core design is exceptionally difficult to cast and/or machine as well as to wind coils on, and is not well suited for manufacturing and mass production.

The present invention uses a minimal number of elements and comprises simple apparatus and techniques for reducing the undesirable effects of electromagnetic interference (EMI) as may typically be caused by high voltage ignition wiring and the like in close proximity to the magnetostrictive sensor.

It does this by orienting pickup coils spatially such that undesirable voltages which would otherwise be induced by external magnetic fluxes are self canceling while voltages induced by stress variations in a load carrying member are additive. In a typical application for a cross design magnetostrictive sensor, two pickup coils are connected in series with each wound around a separate leg of the pickup C core in opposite directions, one clockwise, one counterclockwise. Flux induced by the magnetostrictive effect passing through the C core will then produce voltages in each coil which are electrically additive, but stray flux from other external sources will produce equal and opposite voltages in the two coils and thereby cancel one another electrically.

The present invention thereby solves the problem of externally induced voltages associated with prior art in a superior, simpler, and less expensive manner with significantly fewer complications for servicing and maintenance.

### Brief Description of the Drawings

Figure 1 is a front perspective view of a prior art magnetostrictive sensor design known as the "four branch" design.

Figure 2 is a side view of a prior art magnetostrictive sensor design known as the "cross" design.

Figure 3A is a side view of a prior art magnetostrictive sensor design known as the "single" branch or "C core" design.

Figure 3B is a prior art side view of the magnetostrictive design shown in Figure 3A incorporating a single coil as both the driver and the pickup coil.

Figure 4 illustrates an embodiment of the invention, comprising a single core arrangement, which reduces EMI problems.

### Description of Preferred Embodiments

The present invention will now be described more fully hereinafter with reference to the accompanying drawings, in which preferred embodiments of the invention are shown. This invention may, however, be embodied in many different forms and should not be construed as limited to the embodiments set forth herein; rather, applicant provides these embodiments so that this disclosure will be thorough and complete, and will fully convey the scope of the invention to those skilled in the art.

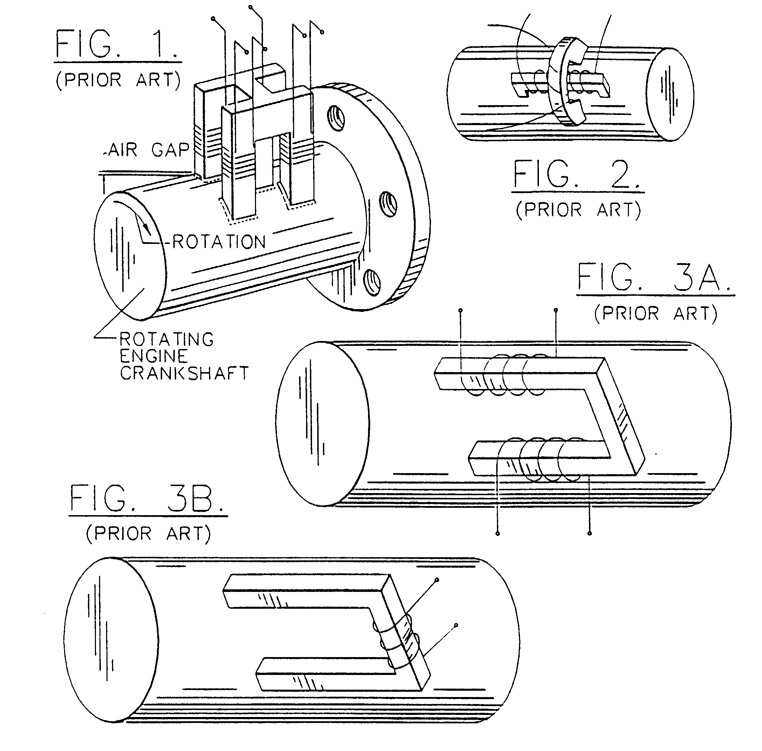

Figure 1 shows a typical magnetostrictive sensor design as shown in U.S. Patents 4,414,856 and 4,503,714 for example, and is commonly referred to as the "four branch" design. Figure 2 shows an alternative design as shown in U.S. Patents 2,912,642, 3,011,340, 4,589,290, and 4,939,937 for example, and is known as the "cross" design. Figure 3 depicts yet another design known as the "single branch" or "C-core" design. Other designs exist, notably the solenoidal design as shown in U.S. Patent 4,760,745 for example, and the "dual", or generically, "multiple branch" designs.

These designs typically employ one or more primary, or excitation, coils to generate magnetic flux in the shaft. They also typically employ one or more secondary, or pick-up, coils that monitor the changes which may occur in the magnetic flux in the shaft. The coils are commonly wound around ferromagnetic cores. Changes in torque produce changes in the torsional stress on the shaft which causes strain in the shaft. Due to the principle of magnetostriction, the stress/strain changes produce changes in the magnetic flux in the shaft. These flux changes produce voltage changes in the secondary coil(s), and hence, the voltage level across the secondary coil(s) is related to the torque applied to the shaft.

In Figure 2, for example, either of the coils shown may be the excitation coil and the other the pickup coil.

Other designs exist with some modifications to this basic theme. For example, U.S. Patent 4,939,937 and Application Serial No. 07/518,083 show a magnetostrictive sensor in which the primary coil(s) and the secondary coil(s) are the same. The present invention shown herein is not limited in any way by the particular magnetostrictive sensor; rather, the present invention relates to use of any magnetostrictive sensor design, and any design limitations in ensuing discussions are shown solely for the purpose of simplifying the explanation.

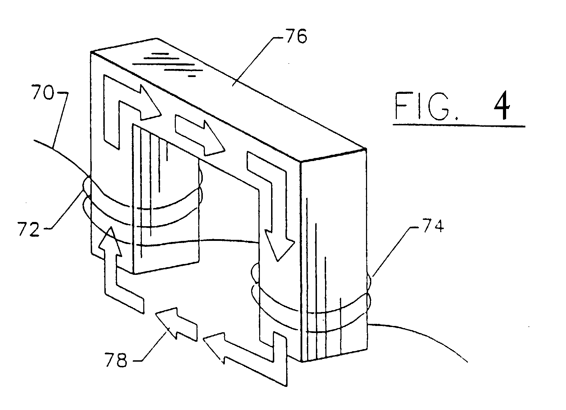

Electromagnetic interference (EMI) from external sources may be a problem, and Figure 4 illustrates an embodiment of the invention which reduces EMI problems. Although Figure 4 shows a single core arrangement, it is also applicable to multiple core sensor designs such as that shown in Figure 2. In such multiple core designs each core may be similar to that shown in Figure 4. That is, the core/coil arrangement of Figure 4 may serve either as a driver or pickup. In addition, the concept revealed in the present embodiment may be used with any type of sensor design, including those shown in Figures 1, 2, 3 as well as solenoidal or other type designs.

In Figure 4, the wire lead **70** forms two coils **72** and **74** connected in series with each coil wound around the core **76.** The direction of orientation of the two coils **72, 74** is such that one coil is wound clockwise looking from above while the other coil is wound counterclockwise looking from the same direction.

From the perspective of the magnetic flux flowing through the core represented by the arrows **78**, however, both coils appear to be wound in the same direction, i.e., clockwise. Hence if drive current were supplied through the wire lead **70**, then each coil **72** and **74** would serve to set up the flux **78** and each coil would, in fact, produce fluxes which are additive in effect. That is, both coils produce flux flowing in the same direction (clockwise around the core as seen in Figure 4.) External magnetic fields such as radio waves, fields from spark plug firing, etc. would, however, pass through the entire apparatus with the entire field propagation direction effectively the same everywhere.

For example, plane electromagnetic waves propagating from above in Figure 4 would pass through both coils **72** and **74** at the same time and with the same magnitude, frequency, etc. The effect on the voltage in coil **72** would be opposite the effect in coil **74** since, viewed from above, the two coils are wound in opposite directions. The voltages produced in coils **72** and **74** by the external field cancel one another leaving zero net voltage from external field causes. The additive effects from the input current into lead **70**, however, do not cancel.

Identical logic holds when coils **72** and **74** are pickup coils whose voltages arise from the flux **78**. The voltages produced in coils **72** and **74** from flux **78** are additive whereas the voltages from external fields are equal but opposite in each coil. Hence, EMI caused changes in pickup voltage are rendered negligible yet voltage dependence on the shaft stress state remains.

Obviously, more than 2 coils may be used to the same end, and other shapes of cores may be employed. The invention comprises any use of coils arranged such that effects from external electric and/or magnetic fields becoming self canceling.

### Advantages Over Prior Art

This invention may thus be seen to solve the problems delineated in the "Background of the Invention" section in a simple, novel, and practical manner. While the above descriptions contain many specific examples, these should not be construed as limitations on the scope of the invention, but merely as exemplifications of preferred embodiments. Those skilled in the art will envision many other possibilities that are within its scope. For example, any of the embodiments may use any type of sensor(s) of any shape, size, or materials. The housing may be of any material and may, in particular, include Mu metal or some similar material to minimize magnetic flux loss. Such Mu metal or similar material may be used to enclose some, much, or all of the sensing elements within the sensor and typically would be used in addition to a dielectric housing material such as ceramic, epoxy, etc. Further, wherever the term "shaft" is used, any load transmitting member is intended, and the member may be of any material, size, or shape.

Many modifications and other embodiments of the invention will come to one skilled in the art having the benefit of the teachings presented in the foregoing descriptions and the associated drawings.

## Claims

1. A magnetostrictive sensor comprising :
a first winding ;
a second winding, and sensor related magnetic flux which passes through both windings and induces sensor related voltages in both windings, such that a first sensor related voltage induced in said first winding and a second sensor related voltage induced in said second winding are additive and do not cancel one another, and said first and second windings being electrically connected and oriented with respect to each other in opposite directions such that any external magnetic field passing through both of said windings induces effectively equal magnitude and opposite polarity, externally related voltages in said windings such that said externally related voltages effectively cancel one another to produce an effectively zero net externally related voltage thereby suppressing stray electromagnetic interference induced voltage in raid sensor wherein both of said windings are connected in series and wound on the same core through which the same induced flux path passes, wherein said core is generally U-shaped and has first and second spaced legs, and wherein said first windings is wound onto said first leg in a first direction and said second winding is wound onto said second leg in a second direction opposite to said first direction.

2. A sensor as set forth in claim 1 wherein said windings are open circuit and do not carry electric current.

3. A sensor as set forth in claim 1 wherein said windings carry electric current.

4. A sensor as set forth in claim 1 wherein each of said legs has an end portion for positioning adjacent thereto a torque transmitting element.

5. A sensor as set forth in any of the above claims wherein said first and second windings are part of a sensor driver circuit or of a sensor pickup.

6. A sensor as set forth in any of the above claims wherein said sensor is a cross design magnetostrictive sensor.

7. A sensor as set forth in any of the above claims wherein the first and second windings are part of a sensor pickup circuit.

## Patentansprüche

1. Magnetostriktiver Sensor, welcher folgendes umfaßt:
eine erste Wicklung;
eine zweite Wicklung, und einen mit dem Sensor in Beziehung stehenden magnetischen Fluß, der durch beide Wicklungen verläuft und in beiden Wicklungen mit dem Sensor in Beziehung stehende Spannungen induziert, so daß eine in der ersten Wicklung induzierte, mit dem Sensor in Beziehung stehende erste Spannung und eine in der zweiten Wicklung induzierte, mit dem Sensor in Beziehung stehende zweite Spannung additiv sind und einander nicht aufheben, und wobei die erste und die zweite Wicklung elektrisch angeschlossen und in entgegengesetzten Richtungen zueinander orientiert sind, so daß ein beliebiges externes Magnetfeld, das durch beide Wicklungen verläuft, mit außen in Beziehung stehende Spannungen mit effektiv gleicher Größe und entgegengesetzter Polarität in den Wicklungen induziert, so daß die mit außen in Beziehung stehenden Spannungen effektiv einander aufheben, um eine mit außen in Beziehung stehende Nettospannung von effektiv Null zu erzeugen, wodurch eine durch elektromagnetische Streuinterferenz induzierte Spannung in dem Sensor unterdrückt wird, wobei beide Wicklungen in Reihe geschaltet sind und auf demselben Kern gewickelt sind, durch den derselbe Induktionsflußweg verläuft, wobei der Kern im allgemeinen U-förmig ist und einen ersten und einen zweiten beabstandeten Schenkel aufweist, und wobei die erste Wicklung in einer ersten Richtung auf den ersten Schenkel gewickelt ist und die zweite Wicklung in einer zweiten Richtung entgegengesetzt zur ersten Richtung auf den zweiten Schenkel gewickelt ist.

2. Sensor nach Anspruch 1, wobei sich die Wicklungen im Leerlauf befinden und keinen elektrischen Strom führen.

3. Sensor nach Anspruch 1, wobei die Wicklungen elektrischen Strom führen.

4. Sensor nach Anspruch 1, wobei jeder der Schenkel einen Endteil aufweist, um benachbart dazu ein Drehmomentübertragungselement zu positionieren.

5. Sensor nach einem der obigen Ansprüche, wobei die erste und die zweite Wicklung ein Teil eines Sensortreiberkreises oder eines Sensoraufnehmers sind.

6. Sensor nach einem der obigen Ansprüche, wobei der Sensor ein magnetostriktiver Sensor in Kreuzausführung ist.

7. Sensor nach einem der obigen Ansprüche, wobei die erste und die zweite Wicklung ein Teil einer Sensoraufnehmerschaltung sind.

## Revendications

1. Capteur à magnétostriction comprenant :
un premier enroulement ;
un deuxième enroulement, un flux magnétique fonction du capteur qui passe à travers les deux enroulements et induit des tensions fonction du capteur dans les deux enroulements, de sorte qu'une première tension fonction du capteur induite dans ledit premier enroulement et une deuxième tension fonction du capteur induite dans ledit deuxième enroulement s'additionnent et ne s'annulent pas réciproquement, et lesdits premier et deuxième enroulements étant électriquement connectés et orientés l'un par rapport à l'autre dans des sens opposés de sorte que tout champ magnétique externe passant à travers lesdits deux enroulements induit réellement des tensions fonction de l'extérieur, d'amplitude égale et de polarités opposées, dans lesdits enroulements de sorte que lesdites tensions fonction de l'extérieur s'annulent réellement réciproquement pour produire une tension fonction de l'extérieur résultante nulle, supprimant ainsi une tension induite d'interférence électromagnétique parasite dans ledit capteur, dans lequel lesdits deux enroulements sont connectés en série et bobinés sur le même noyau par l'intermédiaire duquel le même chemin de flux induit passe, dans lequel ledit noyau est globalement en forme de U et comporte des premier et second bras espacés, et dans lequel ledit premier enroulement est bobiné sur ledit premier bras dans un premier sens et ledit deuxième enroulement est bobiné sur ledit second bras dans un deuxième sens opposé audit premier sens.

2. Capteur selon la revendication 1, dans lequel lesdits enroulements sont des circuits ouverts et ne transportent pas de courant électrique.

3. Capteur selon la revendication 1, dans lequel lesdits enroulements transportent du courant électrique.

4. Capteur selon la revendication 1, dans lequel chacun desdits bras comporte une partie d'extrémité destinée à positionner un élément de transmission de couple qui lui soit adjacent.

5. Capteur selon l'une quelconque des revendications précédentes, dans lequel lesdits premier et deuxième enroulements font partie d'un circuit d'attaque de capteur ou d'un lecteur à capteur.

6. Capteur selon l'une quelconque des revendications précédentes, dans lequel ledit capteur est un capteur à magnétostriction en forme de croix.

7. Capteur selon l'une quelconque des revendications précédentes, dans lequel lesdits premier et deuxième enroulements font partie d'un circuit de lecteur à capteur.
